Europäisches Patentamt

European Patent Office

Office européen des brevets

(19)

(11) EP 1 583 271 A2

(12) **EUROPEAN PATENT APPLICATION**

(43) Date of publication:
05.10.2005 Bulletin 2005/40

(51) Int Cl.⁷: **H04L 1/04**, H04L 27/26

(21) Application number: 05003297.8

(22) Date of filing: 16.02.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **31.03.2004 US 557946 P**
**25.06.2004 US 877638**

(72) Inventor: **Ojard, Eric J.**
**94107 San Francisco (US)**

(74) Representative: **Jehle, Volker Armin**
**Bosch, Graf v. Stosch, Jehle**
**Patentanwaltsgesellschaft mbH**
**Flüggenstrasse 13**
**80639 München (DE)**

(71) Applicant: **Broadcom Corporation**
**California 92618-7013 (US)**

(54) **System and method for spreading on fading channels**

(57) This disclosure describes a simple spreading technique that improves performance for communication over fading channels with QPSK or BPSK modulation. The technique may comprise combining two symbols at the transmitter by applying a 2x2 transform, resulting in a 4-PAM or 16-QAM constellation. The receiver may utilize a 2-dimensional soft de-mapper to provide inputs to a soft-input decoder. This scheme can offer significant performance gains over fading channels with minimal additional complexity. This technique is most beneficial on systems with a weak code or no code at all. One application of this technique is for coded OFDM systems that experience frequency-selective fading. An example of such a system is the MBOA draft specification for UWB wireless communications.

800

**Figure 8**

```
         Start              810
           │
           ▼
    Receive Data Bits        812
           │
           ▼
    Encode Data Bits         814
           │
           ▼
   Interleave Encoded        816
       Data Bits
           │
           ▼
    Map Interleaved          818
  Encoded Data Bits To
    Pairs of Symbols
           │
           ▼
   Combine Pairs Of          820
  Symbols To Produce
    Second Pairs Of
       Symbols
           │
           ▼
  Transmit Second Pairs      822
      Of Symbols
           │
           ▼
          End                824
```

EP 1 583 271 A2

**Description**

RELATED APPLICATIONS

This application makes reference to, claims priority to, and claims the benefit of United States Provisional Patent Application Serial No. 60/557,946, entitled "System & Method For Spreading On Fading Channels" (Attorney Docket 15670US01 BP-3587), filed March 31, 2004, the complete subject matter of which is hereby incorporated herein by reference, in its entirety.

FEDERALLY SPONSORED RESEARCH OR DEVELOPMENT

[Not Applicable]

[MICROFICHE/COPYRIGHT REFERENCE]

[Not Applicable]

BACKGROUND OF THE INVENTION

Many radio frequency (RF) communication systems experience fading of the transmitted symbols, where different symbols are received at different amplitudes (and/or different noise levels). One common example is Coded Orthogonal Frequency Division Multiplexing (Coded OFDM or COFDM) transmitted over a communications channel experiencing multi-path interference. In this example, the transmitted signal experiences frequency-selective fading. When the multi-path interference is sufficiently dense (i.e., the received signal comprises a very large number of signals, where each signal has a different path delay), the fading can be accurately modeled as Rayleigh fading.

The Multiband OFDM Alliance (MBOA) draft specification for Ultra-Wide-Band (UWB) communications is based on coded OFDM. The details of the draft specification for the IEEE 802.15.3a standard may be found in the document "Multi-band OFDM Physical Layer Proposal for IEEE 802.15 Task Group 3a", document IEEE P802.15-03/268r2, dated November 10, 2003, by the Institute of Electrical and Electronics Engineers, Inc., which draft specification is hereby incorporated herein by reference, in its entirety. Typical UWB channels exhibit large amounts of frequency-selective fading, which can often be accurately modeled as Rayleigh fading. At higher coding rates, the proposed specification listed above has relatively poor performance. Specifically, the 480 Mbps mode, which uses quadrature phase shift keyed (QPSK) modulation and a rate ¾ convolutional code, suffers a significant performance penalty in the presence of frequency-selective Rayleigh fading.

There have been several proposals for improving the performance of this mode of the draft specification. One such proposal calls for using 16-QAM (Quadrature Amplitude Modulation) modulation with a rate 3/8 code. This approach improves the performance significantly over Rayleigh-fading channels, but it harms the performance on non-fading channels and on channels with less-severe frequency-selective fading.

Another proposal calls for combining two symbols at the transmitter using a 2x2 Hadamard transform. The proposed approach combines two symbols that may experience different amounts of fading by multiplying by a 2x2 Hadamard Matrix:

$$\begin{bmatrix} y_1 \\ y_2 \end{bmatrix} = \begin{bmatrix} 1 & 1 \\ 1 & -1 \end{bmatrix} \begin{bmatrix} x_1 \\ x_2 \end{bmatrix}$$

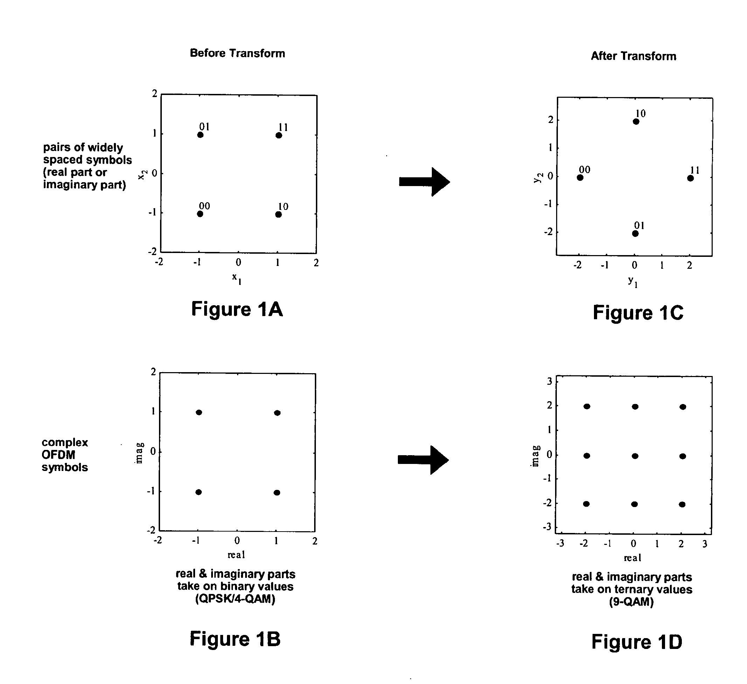

If the values $x_1$ and $x_2$ are assigned a value of -1 for a bit value of 0, and assigned a value of +1 for a bit value of 1, then the output values $y_1$ and $y_2$ take on ternary values. Figure 1A shows the original 2-dimensional constellation of input values $x_1$ and $x_2$. Figure 1B shows the same constellation when input values $x_1$ and $x_2$ are mapped to the real or imaginary parts of different complex signals. Figure 1C shows the 2-dimensional constellation of $y_1$ and $y_2$. Figure 1D shows the resulting constellation of a complex symbol in a passband system where $y_1$ and $y_2$ are mapped to the real or imaginary parts of different complex symbols. The resulting complex constellation is 9-QAM.

At the receiver, a 2-dimensional soft de-mapper may be used to provide inputs to a soft-input decoder such as, for example, a Viterbi decoder. This method performs better than 16-QAM with a rate 3/8 code on non-fading channels, but it doesn't achieve the same performance gains as 16-QAM on Rayleigh-fading channels.

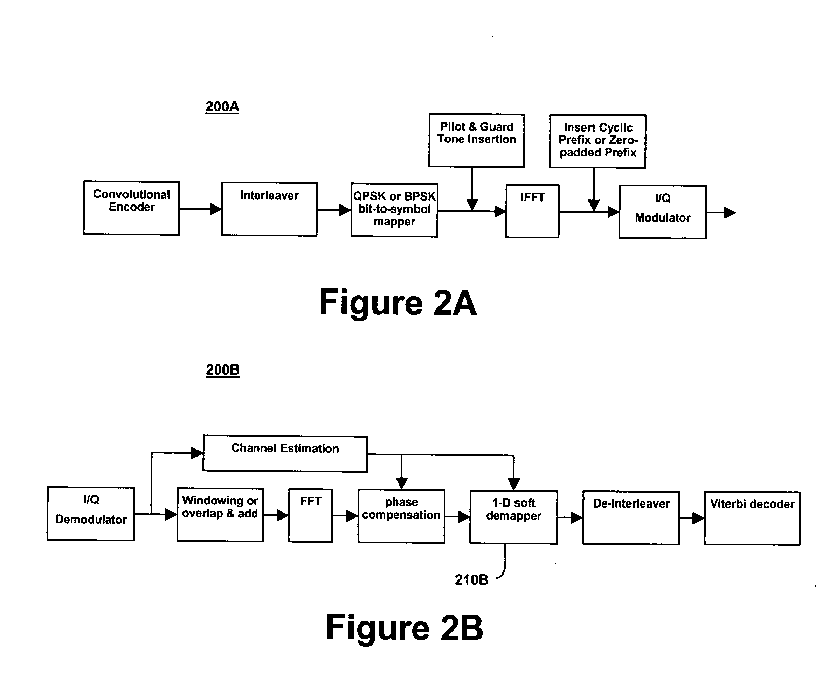

Figure 2A and Figure 2B show the basic components of a transmitter 200A and a receiver 200B of a conventional Coded OFDM system using QPSK modulation. Current techniques to provide improved performance on Rayleigh-fading channels either harm the performance on non-fading channels or fail to achieve significant gains on Rayleigh-fading channels. Other possible techniques, such as stronger coding, can introduce significant complexity at the receiver.

Further limitations and disadvantages of conventional and traditional approaches will become apparent to one of ordinary skill in the art through comparison of such systems with the present invention as set forth in the remainder of the present application with reference to the drawings.

BRIEF SUMMARY OF THE INVENTION

Aspects of the present invention may be seen in a method of transmitting two bits using two symbols, where the two symbols can experience different amounts of fading. Such a method may comprise mapping the two bits to two symbols. In a representative embodiment of the present invention, the mapping may be characterized by a 4-point, 2-dimensional, square constellation rotated about the origin, and a projection of the 4-point, 2-dimensional, square constellation onto either axis may comprise a 1-dimensional constellation with 4 distinct points. The 4 distinct points of the 1-dimensional constellation may be uniformly spaced points. In a representative embodiment in accordance with the present invention, the method may also comprise transmitting the two symbols. The two bits may be the output of an interleaver, the two bits may be the output of an encoder employing a forward error correction (FEC) code, and the forward error correction code may comprise a convolutional code. The transmitting may use radio frequency (RF) communication, and each of the two symbols may be mapped to a different subcarrier of an orthogonal frequency division multiplexed (OFDM) communications link. In a representative embodiment in accordance with the present invention, the transmitting may be compatible with the Multi-band OFDM Physical Layer Proposal for IEEE 802.15 Task Group 3a.

Additional aspects of the present invention may be found in a system for transmitting two bits using two symbols, where the two symbols can experience different amounts of fading. A representative embodiment of the present invention may comprise at least one processor for processing the two bits for transmission, and the at least one processor may be capable of mapping the two bits to two symbols. The mapping may be characterized by a 4-point, 2-dimensional, square constellation rotated about the origin, and a projection of the 4-point, 2-dimensional, square constellation onto either axis may comprise a 1-dimensional constellation with 4 distinct points. The 4 distinct points of the 1-dimensional constellation may be uniformly spaced points. The at least one processor may be capable of transmitting the two symbols. Processing the two bits for transmission may comprise application of an interleaving algorithm. Processing the two bits for transmission may also comprise encoding the two bits employing a forward error correction (FEC) code, and the forward error correction code may comprise a convolutional code. In a representative embodiment of the present invention, the transmitting may comprise communicating the two symbols using radio frequency (RF) signals. Each of the two symbols may be mapped to a different subcarrier of an orthogonal frequency division multiplexed (OFDM) communications link, and the transmitting may be compatible with the Multi-band OFDM Physical Layer Proposal for IEEE 802.15 Task Group 3a.

Further aspects of the present invention may be observed in a machine-readable storage, having stored thereon a computer program having a plurality of code sections for implementing a method of transmitting two bits using two symbols, wherein the two symbols can experience different amounts of fading. The code sections may be executable by a machine for causing the machine to perform the operations comprising mapping the two bits to two symbols. The mapping may be characterized by a 4-point, 2-dimensional, square constellation rotated about the origin, and a projection of the 4-point, 2-dimensional, square constellation onto either axis may comprise a 1-dimensional constellation with 4 distinct points. The 4 distinct points of the 1-dimensional constellation may be uniformly spaced points. A representative embodiment of the present invention may also comprise transmitting the two symbols. A representative embodiment of the present invention may comprise processing the two bits using an interleaving algorithm, and encoding the two bits employing a forward error correction (FEC) code, where the forward error correction code may comprise a convolutional code. The transmitting may comprise communicating the two symbols using radio frequency (RF) signals, and the two symbols may be mapped to different subcarriers of an orthogonal frequency division multiplexed (OFDM) communications link. The transmitting may be compatible with the Multi-band OFDM Physical Layer Proposal for IEEE 802.15 Task Group 3a.

Other aspects of the present invention may be seen in a system capable of modulating two data bits mapped as separate symbols for joint transmission over separate paths subject to different amounts of fading, where mapping of the two data bits to two symbols may be characterized by a 4-point, 2-dimensional, square constellation rotated about the origin. A projection of the 4-point, 2-dimensional, square constellation onto either axis may comprise a 1-dimensional constellation with 4 distinct points. The 4-point, 2-dimensional, square constellation may comprise a subset of a square, uniformly-spaced, 16-point constellation, and a projection of the 4-point, 2-dimensional, square constellation onto either axis may comprise a uniformly-spaced, 4-point constellation. In a representative embodiment of the present invention, the paths may be separate subcarriers in a communication system using multi-band orthogonal frequency division multiplexing (OFDM).

Aspects of the present invention may also be found in a method of receiving two symbols to produce two data bits, where the two symbols are subject to different amounts of fading. Such a method may comprise estimating two fading amplitudes, receiving two symbols, jointly processing the received two symbols using the two fading amplitudes to produce two soft outputs, and decoding the two soft outputs using a forward error correction decoder. The decoding may comprise de-interleaving the two soft outputs, and decoding the de-interleaved two soft outputs to produce decoded output bits.

Still other aspects of the present invention may be seen in a machine-readable storage, having stored thereon a computer program having a plurality of code sections for implementing a method of receiving two symbols to produce two data bits, where the two symbols are subject to different amounts of fading. The code sections may be executable by a machine for causing the machine to perform the operations comprising estimating two fading amplitudes, receiving two symbols, jointly processing the received two symbols using the two fading amplitudes to produce two soft outputs, and decoding the two soft outputs using a forward error correction decoder. The decoding in a representative embodiment of the present invention may comprise de-interleaving the two soft outputs, and decoding the de-interleaved two soft outputs to produce decoded output bits.

Additional aspects of the present invention may be observed in a system for receiving two symbols to produce two data bits, where the two symbols are subject to different amounts of fading. Such a system may comprise at least one processor capable of estimating two fading amplitudes, and the at least one processor may be capable of receiving two symbols. The at least one processor may also be capable of jointly processing the received two symbols using the two fading amplitudes to produce two soft outputs, and the at least one processor may be capable of decoding the two soft outputs using a forward error correction decoder. The decoding may comprise de-interleaving the two soft outputs, and decoding the de-interleaved two soft outputs to produce decoded output bits.

According to an aspect of the invention, a method of transmitting two bits using two symbols is provided, wherein the two symbols can experience different amounts of fading, the method comprising:

mapping the two bits to two symbols, wherein the mapping may be characterized by a 4-point, 2-dimensional, square constellation rotated about the origin, and wherein a projection of the 4-point, 2-dimensional, square constellation onto either axis comprises a 1-dimensional constellation with 4 distinct points; and

transmitting the two symbols.

Advantageously, the two bits are the output of an interleaver.

Advantageously, the two bits are the output of an encoder employing a forward error correction (FEC) code.

Advantageously, the forward error correction code comprises a convolutional code.

Advantageously, the transmitting uses radio frequency (RF) communication.

Advantageously, each of the two symbols is mapped to a different subcarrier of an orthogonal frequency division multiplexed (OFDM) communications link.

Advantageously, the transmitting is compatible with the Multi-band OFDM Physical Layer Proposal for IEEE 802.15 Task Group 3a.

Advantageously, the 4 distinct points of the 1-dimensional constellation are uniformly spaced points.

According to an aspect of the invention, a system for transmitting two bits using two symbols is provided, wherein the two symbols can experience different amounts of fading, the system comprising:

at least one processor for processing the two bits for transmission;

the at least one processor capable of mapping the two bits to two symbols, wherein the mapping may be characterized by a 4-point, 2-dimensional, square constellation rotated about the origin, and wherein a projection of the 4-point, 2-dimensional, square constellation onto either axis comprises a 1-dimensional constellation with 4 distinct points; and

the at least one processor capable of transmitting the two symbols.

Advantageously, processing the two bits for transmission comprises application of an interleaving algorithm.

Advantageously, processing the two bits for transmission comprises encoding the two bits employing a forward error correction (FEC) code.

Advantageously, the forward error correction code comprises a convolutional code.

Advantageously, the transmitting comprises communicating the two symbols using radio frequency (RF) signals.

Advantageously, each of the two symbols is mapped to a different subcarrier of an orthogonal frequency division multiplexed (OFDM) communications link.

Advantageously, the transmitting is compatible with the Multi-band OFDM Physical Layer Proposal for IEEE 802.15 Task Group 3a.

Advantageously, the 4 distinct points of the 1-dimensional constellation are uniformly spaced points.

According to an aspect of the invention, a machine-readable storage is provided, having stored thereon a computer program having a plurality of code sections for implementing a method of transmitting two bits using two symbols, wherein the two symbols can experience different amounts of fading, the code sections executable by a machine for causing the machine to perform the operations comprising:

mapping the two bits to two symbols, wherein the mapping may be characterized by a 4-point, 2-dimensional, square constellation rotated about the origin, and wherein a projection of the 4-point, 2-dimensional, square constellation onto either axis comprises a 1-dimensional constellation with 4 distinct points; and

transmitting the two symbols.

Advantageously, the operations further comprise processing the two bits using an interleaving algorithm.

Advantageously, the operations further comprise encoding the two bits employing a forward error correction (FEC) code.

Advantageously, the forward error correction code comprises a convolutional code.

Advantageously, the transmitting comprises communicating the two symbols using radio frequency (RF) signals.

Advantageously, the two symbols are mapped to different subcarriers of an orthogonal frequency division multiplexed (OFDM) communications link.

Advantageously, the transmitting is compatible with the Multi-band OFDM Physical Layer Proposal for IEEE 802.15 Task Group 3a.

Advantageously, the 4 distinct points of the 1-dimensional constellation are uniformly spaced points.

According to an aspect of the invention, a system is provided capable of modulating two data bits mapped as separate symbols for joint transmission over separate paths subject to different amounts of fading, wherein mapping of the two data bits to two symbols may be characterized by a 4-point, 2-dimensional, square constellation rotated about the origin, and wherein a projection of the 4-point, 2-dimensional, square constellation onto either axis comprises a 1-dimensional constellation with 4 distinct points.

Advantageously, the 4-point, 2-dimensional, square constellation comprises a subset of a square, uniformly-spaced, 16-point constellation, and wherein a projection of the 4-point, 2-dimensional, square constellation onto either axis comprises a uniformly-spaced, 4-point constellation.

Advantageously, the paths are separate subcarriers in a communication system using multi-band orthogonal frequency division multiplexing (OFDM).

According to an aspect of the invention, a method of receiving two symbols to produce two data bits is provided, wherein the two symbols are subject to different amounts of fading, the method comprising:

estimating two fading amplitudes;

receiving two symbols;

jointly processing the received two symbols using the two fading amplitudes, to produce two soft outputs; and

decoding the two soft outputs using a forward error correction decoder.

Advantageously, the decoding comprises:

de-interleaving the two soft outputs; and

decoding the de-interleaved two soft outputs to produce decoded output bits.

According to an aspect of the invention, a machine-readable storage is provided, having stored thereon a computer program having a plurality of code sections for implementing a method of receiving two symbols to produce two data bits, wherein the two symbols are subject to different amounts of fading, the code sections executable by a machine for causing the machine to perform the operations comprising:

estimating two fading amplitudes;

receiving two symbols;

jointly processing the received two symbols using the two fading amplitudes, to produce two soft outputs; and

decoding the two soft outputs using a forward error correction decoder.

Advantageously, the decoding comprises:

de-interleaving the two soft outputs; and
decoding the de-interleaved two soft outputs to produce decoded output bits.

According to an aspect of the invention, a system for receiving two symbols to produce two data bits is provided, wherein the two symbols are subject to different amounts of fading, the system comprising:

at least one processor capable of estimating two fading amplitudes;
the at least one processor capable of receiving two symbols;
the at least one processor capable of jointly processing the received two symbols using the two fading amplitudes, to produce two soft outputs; and
the at least one processor capable of decoding the two soft outputs using a forward error correction decoder.

Advantageously, the decoding comprises:

de-interleaving the two soft outputs; and
decoding the de-interleaved two soft outputs to produce decoded output bits.

These and other features and advantages of the present invention may be appreciated from a review of the following detailed description of the present invention, along with the accompanying figures in which like reference numerals refer to like parts throughout.

BRIEF DESCRIPTION OF SEVERAL VIEWS OF THE DRAWINGS

Figure 1A shows an original 2-dimensional constellation of $x_1$ and $x_2$.
Figure 1B shows the same constellation of Figure 1A when $x_1$ and $x_2$ are mapped to the real or imaginary parts of different complex signals.
Figure 1C shows a 2-dimensional constellation of $y_1$ and $y_2$.
Figure 1D shows the resulting constellation of a complex symbol in a passband system where $y_1$ and $y_2$ of Figure 1A are mapped to the real or imaginary parts of different complex symbols.
Figure 2A shows the basic components of a transmitter of a conventional Coded OFDM system using QPSK modulation.
Figure 2B shows the basic components of a receiver of a conventional Coded OFDM system using QPSK modulation.
Figure 3A shows an exemplary 2-dimensional constellation of two symbols, $x_1$ and $x_2$ that may correspond, for example, to the signal constellation shown in Figure 1A.
Figure 3B shows the constellation of Figure 3A when the symbols, $x_1$ and $x_2$, are mapped to the real or imaginary parts of different complex signals.
Figure 3C shows an illustration of an exemplary 2-dimensional constellation of symbols $y_1$ and $y_2$, in accordance with a representative embodiment of the present invention.
Figure 3D shows the resulting constellation of a complex symbol in a passband system, where $y_1$ and $y_2$ may be mapped to the real or imaginary parts of different complex symbols, in accordance with a representative embodiment of the present invention.
Figure 4A shows a constellation plot that illustrates the compression that occurs when one symbol experiences a deep fade while the other symbol is unaffected.
Figure 4B shows a constellation plot that illustrates the compression that may occur when one symbol experiences a deep fade while the other symbol is unaffected, when a 2x2 Hadamard transform is used for spreading in the communication system of Fig. 4A.
Figure 4C shows a constellation plot that illustrates the behavior in the presence of the same fading affecting the symbols of Figure 4A, of a communication system in accordance with a representative embodiment of the present invention.
Figure 5 shows curves illustrating the performance, in the presence of fading, of previously proposed alternatives for the 480 Mbps mode of the MBOA proposal, and a curve illustrating the performance of a communication system in accordance with a representative embodiment of the present invention.
Figure 6 shows curves illustrating the performance, in the absence of fading, of the previously proposed alternatives for the 480 Mbps mode of the MBOA proposal, and a curve illustrating the performance of a communication system in accordance with a representative embodiment of the present invention.
Figure 7A shows the basic components of a transmitter of an exemplary COFDM communication system, in accordance with a representative embodiment of the present invention.

Figure 7B shows the basic components of a receiver of an exemplary COFDM communication system, in accordance with a representative embodiment of the present invention.

Figure 8 is a flowchart that illustrates an exemplary method of transmitting two data bits on two symbols subject to different amounts of fading, in accordance with a representative embodiment of the present invention.

Figure 9 is a flowchart that illustrates an exemplary method of receiving pairs of symbols transmitted by the method illustrated in Figure 9, wherein the symbols are subject to different amounts of fading, in accordance with a representative embodiment of the present invention.

DETAILED DESCRIPTION OF THE INVENTION

Aspects of the present invention relate in general to the transmission of data using a radio frequency communication system. More specifically, aspects of the present invention comprise a method of mapping data bits to information symbol values prior to transmission, in order to reduce the negative effects of fading upon the recovery of the information symbols at the receiver.

In a representative embodiment of the present invention, an improved encoding scheme may comprise combining two symbols, $x_1$ and $x_2$, that experience different amounts of fading, by multiplying them by a 2x2 matrix, as follows:

$$\begin{bmatrix} y_1 \\ y_2 \end{bmatrix} = \begin{bmatrix} 2 & 1 \\ 1 & -2 \end{bmatrix} \begin{bmatrix} x_1 \\ x_2 \end{bmatrix}$$

The above equation may also include a scaling factor in order to maintain the same transmitted power. In this case, this matrix multiplication results in a simple rotation of the point $(x_1, x_2)$ and does not change the distance properties of the code. If, for example, the two symbols, $x_1$ and $x_2$, take on values from the set [-1, +1] mapped from the binary values of 0 and 1, then the outputs of the above transformation, $y_1$ and $y_2$, may take on values from the set [-3, -1, +1, +3]. Thus, the constellation that results from application of the transform may be 4-PAM (4-level pulse amplitude modulation), or 16-QAM (16-point quadrature amplitude modulation) in a passband system. This is convenient for practical implementations, since the values [-3, -1, +1, +3] may be represented by exactly two bits.

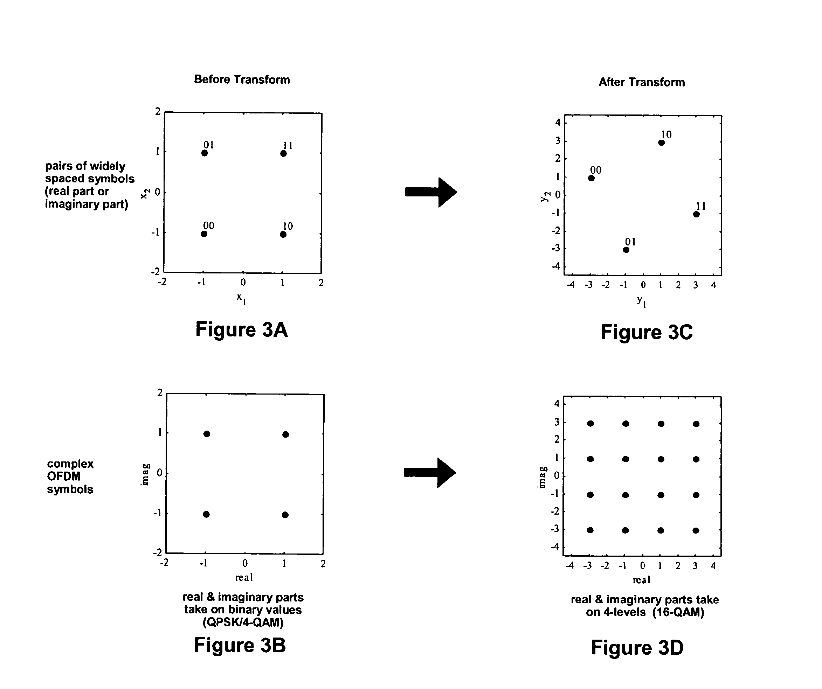

Figure 3A shows an exemplary 2-dimensional constellation of two symbols, $x_1$ and $x_2$ that may correspond, for example, to the constellation shown in Figure 1A. Figure 3B shows the constellation of Figure 3A when the symbols, $x_1$ and $x_2$, are mapped to the real or imaginary parts of different complex signals. Figure 3C shows an illustration of an exemplary 2-dimensional constellation of symbols $y_1$ and $y_2$, in accordance with a representative embodiment of the present invention. The points in the constellation of Figure 3C result from the application of the transform described above. As can be seen in Figure 3C, this transform rotates the points about the origin. The rotation illustrated in Figure 3C produces an arrangement of points in which a projection onto either axis results in a 1-dimensional constellation comprising four distinct and uniformly-spaced points. Figure 3D shows the resulting constellation of a complex symbol in a passband system, where $y_1$ and $y_2$ may be mapped to the real or imaginary parts of different complex symbols, in accordance with a representative embodiment of the present invention. As shown, the resulting complex constellation is 16-QAM.

Note that the bit labeling shown in the figures is only for the purpose of illustration, as other bit labeling schemes may be used in a representative embodiment of the present invention, without affecting the performance. Also, the constellation illustrated in Figure 3C may be flipped about either or both axes, or rotated by multiples of 90 degrees, without affecting the performance, and without deviating from the scope and spirit of the present invention.

In a representative embodiment of the present invention, a variety of methods may be used to decode symbols encoded as described above. A practical decoder that achieves good performance may comprise a 2-dimensional soft de-mapper. Such an approach may provide soft outputs to a soft-input decoder such as, for example, a Viterbi decoder. The two-dimensional soft de-mapper in a representative embodiment of the present invention may function according to the method described below.

Considering two transmitted symbols $y_1$ and $y_2$ from the 2-dimensional constellation shown in Figure 3B, let $a_1$ and $a_2$ be the corresponding fade amplitudes (assumed to be approximately known from channel estimation), and let $n_1$ and $n_2$ be the corresponding noise on each received symbol, assumed to be additive white Gaussian noise (AWGN) with variance $\sigma^2$. Let $z_1$ and $z_2$ be the two received symbols.

$$z_1 = a_1 y_1 + n_1$$

$$z_2 = a_2 \, y_2 + n_2$$

Assuming the bit labeling of points shown in the constellation as shown in Figure 3C, where bit #1 is the leftmost bit and bit #2 is the right-most bit in the label, the 2-dimensional soft de-mapper in a representative embodiment of the present invention may compute the values of the following two expressions:

$$LLR1 = Log\left[\frac{e^{-((z_1-3a_1)^2+(z_2+a_2)^2)/2\sigma^2} + e^{-((z_1-a_1)^2+(z_2-3a_2)^2)/2\sigma^2}}{e^{-((z_1+3a_1)^2+(z_2-a_2)^2)/2\sigma^2} + e^{-((z_1+a_1)^2+(z_2+3a_2)^2)/2\sigma^2}}\right]$$

$$LLR2 = Log\left[\frac{e^{-((z_1-3a_1)^2+(z_2+a_2)^2)/2\sigma^2} + e^{-((z_1+a_1)^2+(z_2+3a_2)^2)/2\sigma^2}}{e^{-((z_1+3a_1)^2+(z_2-a_2)^2)/2\sigma^2} + e^{-((z_1-a_1)^2+(z_2-3a_2)^2)/2\sigma^2}}\right]$$

Where LLR1 and LLR2 are log-likelihood ratios for bits 1 & 2, respectively.

These values may be used as inputs to a soft-input decoder such as, for example, a Viterbi decoder.

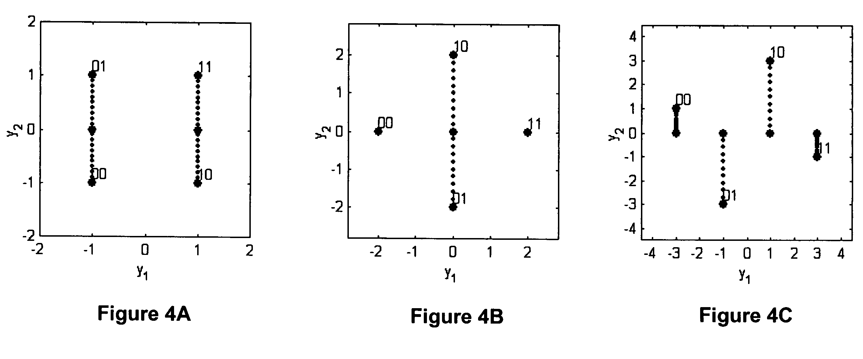

Figure 4A shows a constellation plot that illustrates the compression that occurs when one symbol experiences a deep fade while the other symbol is unaffected. In the illustration of Figure 4A, for example, the path carrying symbol $y_2$ is affected by a deep fade, while the path carrying symbol $y_1$ is unaffected. In a system according to the prior art, a deep fade causes the minimum distance between the points in the constellation to decrease proportionally with the fade amplitude, $a_2$, as illustrated in Figure 4A.

Figure 4B shows a constellation plot that illustrates the compression that may occur due to a deep fade of only one symbol, when a 2x2 Hadamard transform is used for spreading in the communication system of Fig. 4A. Beyond a certain fade depth, the minimum distance decreases proportionally with the fade amplitude, $a_2$, but the minimum distance remains greater than that of the non-spread system by a factor of $\sqrt{2}$, or 3 dB. This gives a communication system in which spreading is employed, an advantage over a non-spread communication system. In spite of this advantage, the minimum distance in a communication system employing spreading as described above still approaches zero as the fade amplitude of one path, in this example $a_2$, approaches zero.

Figure 4C shows a constellation plot that illustrates the behavior in the presence of the fading affecting the signals of Figure 4A, of a communication system in accordance with a representative embodiment of the present invention. It can be seen in the illustration of Figure 4C that as the fade amplitude, $a_2$, (that is associated with $y_2$) decreases, the minimum distance decreases. It should be noted, however, that unlike the behavior illustrated in Figure 4B, the minimum distance of the constellation shown in Figure 4C does not approach zero. Only when both symbols experience deep fades, and the fade amplitudes, $a_1$ and $a_2$ of $y_1$ and $y_2$, respectively, approach zero, does the minimum distance approach zero. This behavior gives an embodiment of the present invention an advantage even over 2x2 Hadamard spreading.

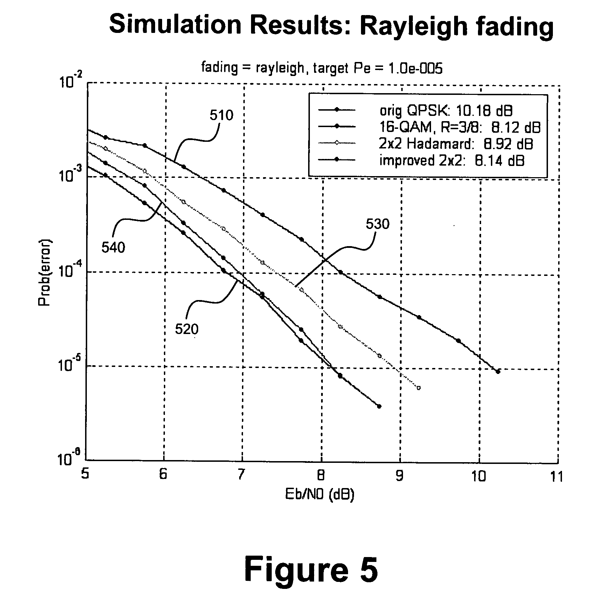

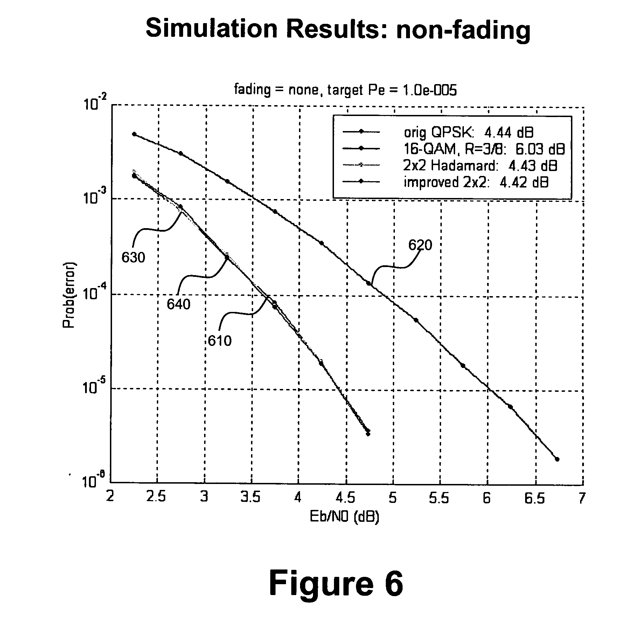

Figure 5 shows curves 510, 520, 530 illustrating the performance, in the presence of fading, of previously proposed alternatives for the 480 Mbps mode of the MBOA proposal, and a curve 540 illustrating the performance of a communication system in accordance with a representative embodiment of the present invention. The simulation used to produce the results shown in Figure 5 assumes independent Rayleigh fading, which represents a typical multi-band OFDM (MB-OFDM) UWB channel in a system with a well-designed interleaver. In contrast, Figure 6 shows curves 610, 620, 630 illustrating the performance, in the absence of fading, of the previously proposed alternatives for the 480 Mbps mode of the MBOA proposal, and a curve 640 illustrating the performance of a communication system in accordance with a representative embodiment of the present invention. In the curves of both Figures 5 and 6, the Y axis represents the probability of decision error per bit. Curve 510 of Figure 5 and curve 610 of Figure 6 show the expected performance of the original proposed MBOA draft specification using QPSK with a rate ¾ convolutional code, in the presence or absence of fading, respectively. As can be seen in the illustration of Figure 5, the proposed draft specification, as shown by curve 510, has a significantly higher probability of decision error per bit in the presence of Rayleigh fading, than the other approaches shown. Curve 520 of Figure 5 and 620 of Figure 6 show the expected performance in the presence and absence of fading, respectively, of an alternate proposal to use 16-QAM with a rate 3/8 code. As shown by curve 520 of Figure 5, this approach may perform significantly better than the proposed MBOA draft specification, shown by curve 510, in situations experiencing Rayleigh fading. This alternate approach, however, may hurt performance when employed over non-fading channels, as shown by the significantly higher probability of decision error per bit, as illustrated by curve 620 of Figure 6.

Curve 530 of Figure 5 and 630 of Figure 6 show the expected performance of an alternate proposal to use 2x2 Hadamard spreading, in the presence and absence of fading, respectively. This alternate approach performs better than the proposed MBOA draft specification when used over channels experiencing Rayleigh fading, as illustrated by curve 530 of Figure 5, but does not perform nearly as well as the 16-QAM proposal, illustrated by curve 520.

Curve 540 of Figure 5 and curve 640 of Figure 6 show the expected performance in the presence and absence of fading, respectively, of a communication system in accordance with a representative embodiment of the present invention. This approach outperforms the 2x2 Hadamard spreading shown by curve 530 by a significant margin, and performs very near to the performance of the 16-QAM rate-3/8 proposal, as shown by curve 520. However, unlike the performance of the 16-QAM rate-3/8 proposal, the performance of an embodiment of the present invention is not diminished when used over non-fading channels. The superior performance in non-fading conditions of a embodiment of the present invention can be seen by comparing curve 640 of Figure 6, to that of the 16-QAM rate 3/8 proposal, shown by curve 620 Figure 6.

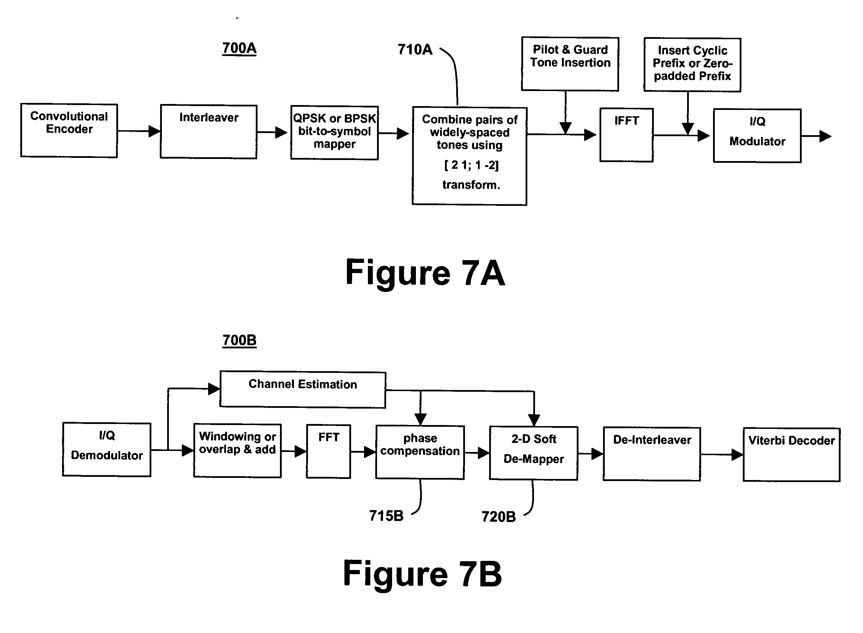

Figure 7A and Figure 7B show the basic components of a transmitter 700A and a receiver 700B of an exemplary OFDM communication system, in accordance with a representative embodiment of the present invention. The majority of the components of the transmitter 700A and receiver 700B of Figure 7A and Figure 7B, respectively, may correspond to the components of the transmitter 200A and receiver 200B of the communication system illustrated in Figure 2A and Figure 2B, respectively. However, in an embodiment in accordance with the present invention, pairs of widely-spaced subcarriers may be combined in the transmitter 700A by applying the transform 710A, described above, to the real and/or imaginary components separately. For optimal performance, the pairs of subcarriers may be chosen to maximize the distance between them in the frequency-domain. In a receiver in accordance with a representative embodiment of the present invention, such as the receiver 700B of Figure 7B, the 1-dimensional soft de-mapper, that may correspond to the soft de-mapper 210B of Figure 2, may be replaced by a 2-dimensional soft de-mapper, such as the 2-dimensional soft de-mapper 720B of Figure 7, to operate as described above. The phase compensation block 715B may remove any phase rotation from the received symbol such that the real and imaginary components can be processed separately. The 2-D soft de-mapper 720B may then process the real and imaginary components, as previously described.

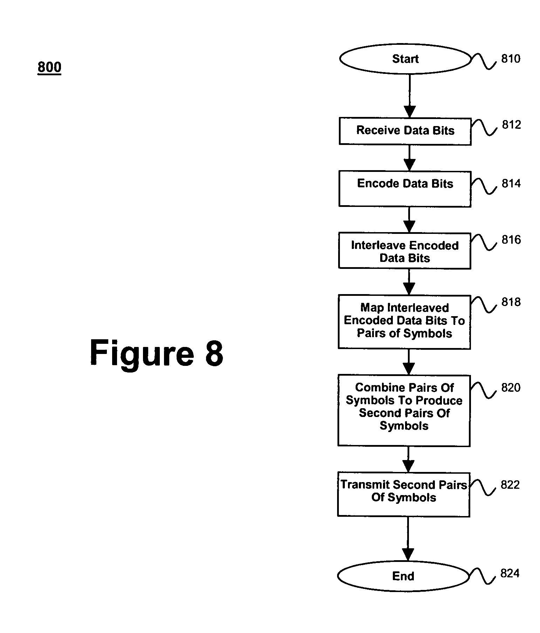

Figure 8 is a flowchart 800 that illustrates an exemplary method of transmitting two data bits on two symbols subject to different amounts of fading, in accordance with a representative embodiment of the present invention. As illustrated in Figure 8, the method begins (810), and a stream of pairs of data bits are received for transmission (812). Each bit in the pair of data bits may then be encoded (814) using an encoding algorithm such as, for example, convolutional coding, and the encoded data bits are interleaved (816). The pairs of interleaved data bits may then be mapped to pairs of symbols (818), and each pair of symbols may be combined (820) to form a new symbol pair using a transform such as that described above with respect to Figures 3C and 4C. The new pair of symbols is then transmitted (822). The method then ends (824).

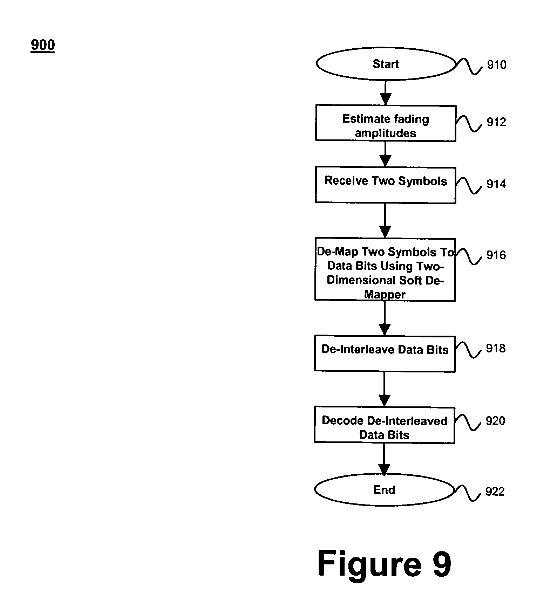

Figure 9 is a flowchart 900 that illustrates an exemplary method of receiving pairs of symbols transmitted by the method illustrated in Figure 9, wherein the symbols are subject to different amounts of fading, in accordance with a representative embodiment of the present invention. As illustrated in Figure 9, the method begins (910), and an estimate of the fading amplitudes for the two symbols is made (912). The two symbols are then received (914). The two received symbols may then be de-mapped using a soft de-mapper (916) such as, for example, the soft de-mapper described above. Together, the two de-mapped symbols produce a pair of data bits. The pairs of data bits may then be de-interleaved (920), and decoded (922), reproducing a stream of pairs of data bits. The method then ends (924).

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

**Claims**

1. A method of transmitting two bits using two symbols, wherein the two symbols can experience different amounts of fading, the method comprising:

   mapping the two bits to two symbols, wherein the mapping may be **characterized by** a 4-point, 2-dimensional, square constellation rotated about the origin, and wherein a projection of the 4-point, 2-dimensional, square constellation onto either axis comprises a 1-dimensional constellation with 4 distinct points; and
   transmitting the two symbols.

2. The method of claim 1 wherein the two bits are the output of an interleaver.

3. The method of claim 1 wherein the two bits are the output of an encoder employing a forward error correction (FEC) code.

4. A system for transmitting two bits using two symbols, wherein the two symbols can experience different amounts of fading, the system comprising:

   at least one processor for processing the two bits for transmission;
   the at least one processor capable of mapping the two bits to two symbols, wherein the mapping may be **characterized by** a 4-point, 2-dimensional, square constellation rotated about the origin, and wherein a projection of the 4-point, 2-dimensional, square constellation onto either axis comprises a 1-dimensional constellation with 4 distinct points; and
   the at least one processor capable of transmitting the two symbols.

5. The system of claim 4 wherein processing the two bits for transmission comprises application of an interleaving algorithm.

6. A machine-readable storage, having stored thereon a computer program having a plurality of code sections for implementing a method of transmitting two bits using two symbols, wherein the two symbols can experience different amounts of fading, the code sections executable by a machine for causing the machine to perform the operations comprising:

   mapping the two bits to two symbols, wherein the mapping may be **characterized by** a 4-point, 2-dimensional, square constellation rotated about the origin, and wherein a projection of the 4-point, 2-dimensional, square constellation onto either axis comprises a 1-dimensional constellation with 4 distinct points; and
   transmitting the two symbols.

7. A system capable of modulating two data bits mapped as separate symbols for joint transmission over separate paths subject to different amounts of fading, wherein mapping of the two data bits to two symbols may be **characterized by** a 4-point, 2-dimensional, square constellation rotated about the origin, and wherein a projection of the 4-point, 2-dimensional, square constellation onto either axis comprises a 1-dimensional constellation with 4 distinct points.

8. A method of receiving two symbols to produce two data bits, wherein the two symbols are subject to different amounts of fading, the method comprising:

   estimating two fading amplitudes;
   receiving two symbols;
   jointly processing the received two symbols using the two fading amplitudes, to produce two soft outputs; and
   decoding the two soft outputs using a forward error correction decoder.

9. A machine-readable storage, having stored thereon a computer program having a plurality of code sections for implementing a method of receiving two symbols to produce two data bits, wherein the two symbols are subject to different amounts of fading, the code sections executable by a machine for causing the machine to perform the operations comprising:

estimating two fading amplitudes;
receiving two symbols;
jointly processing the received two symbols using the two fading amplitudes, to produce two soft outputs; and
decoding the two soft outputs using a forward error correction decoder.

10. A system for receiving two symbols to produce two data bits, wherein the two symbols are subject to different amounts of fading, the system comprising:

at least one processor capable of estimating two fading amplitudes;
the at least one processor capable of receiving two symbols;
the at least one processor capable of jointly processing the received two symbols using the two fading amplitudes, to produce two soft outputs; and
the at least one processor capable of decoding the two soft outputs using a forward error correction decoder.

**Before Transform**

**pairs of widely spaced symbols (real part or imaginary part)**

**Figure 1A**

**After Transform**

**Figure 1C**

**complex OFDM symbols**

real & imaginary parts
take on binary values
(QPSK/4-QAM)

**Figure 1B**

real & imaginary parts
take on ternary values
(9-QAM)

**Figure 1D**

```
                                    ┌──────────────┐      ┌──────────────┐
                                    │Pilot & Guard │      │ Insert Cyclic│
                                    │Tone Insertion│      │ Prefix or Zero│
                                    │              │      │ padded Prefix│
                                    └──────┬───────┘      └──────┬───────┘
                                           │                     │
┌──────────────┐  ┌──────────────┐  ┌──────────────┐  ┌──────┐  ┌──────────────┐
│ Convolutional│→ │  Interleaver │→ │QPSK or BPSK  │→ │ IFFT │→ │     I/Q      │→
│   Encoder    │  │              │  │bit-to-symbol │  │      │  │  Modulator   │
│              │  │              │  │   mapper     │  │      │  │              │
└──────────────┘  └──────────────┘  └──────────────┘  └──────┘  └──────────────┘
```

# Figure 2A

```
                          ┌──────────────────────┐
                       ┌─→│  Channel Estimation  │──┬──────────┐
                       │  └──────────────────────┘  │          │
                       │                            ↓          ↓
┌──────────┐  ┌──────────────┐  ┌─────┐  ┌──────────────┐  ┌──────────┐  ┌──────────────┐  ┌──────────────┐
│   I/Q    │→ │ Windowing or │→ │ FFT │→ │    phase     │→ │ 1-D soft │→ │De-Interleaver│→ │Viterbi decoder│
│Demodulator│  │overlap & add │  │     │  │ compensation │  │ demapper │  │              │  │              │
└──────────┘  └──────────────┘  └─────┘  └──────────────┘  └──────────┘  └──────────────┘  └──────────────┘
                                                                  │
                                                                210B
```

# Figure 2B

EP 1 583 271 A2

Before Transform

Figure 3A

pairs of widely spaced symbols (real part or imaginary part)

After Transform

Figure 3C

Figure 3B

real & imaginary parts take on binary values (QPSK/4-QAM)

complex OFDM symbols

Figure 3D

real & imaginary parts take on 4-levels (16-QAM)

14

**Figure 4A**

**Figure 4B**

**Figure 4C**

EP 1 583 271 A2

Figure 5

Simulation Results: non-fading

fading = none, target Pe = 1.0e-005

orig QPSK: 4.44 dB
16-QAM, R=3/8: 6.03 dB
2x2 Hadamard: 4.43 dB
improved 2x2: 4.42 dB

Figure 6

700A

710A

| Convolutional Encoder | → | Interleaver | → | QPSK or BPSK bit-to-symbol mapper | → | Combine pairs of widely-spaced tones using [ 2 1; 1 -2] transform. |

Pilot & Guard Tone Insertion

Insert Cyclic Prefix or Zero-padded Prefix

| IFFT | → | I/Q Modulator | →

# Figure 7A

EP 1 583 271 A2

700B

| I/Q Demodulator | → | Windowing or overlap & add | → | FFT | → | phase compensation | → | 2-D Soft De-Mapper | → | De-Interleaver | → | Viterbi Decoder |

Channel Estimation

715B          720B

# Figure 7B

800

Start — 810

Receive Data Bits — 812

Encode Data Bits — 814

Interleave Encoded Data Bits — 816

Map Interleaved Encoded Data Bits To Pairs of Symbols — 818

Combine Pairs Of Symbols To Produce Second Pairs Of Symbols — 820

Transmit Second Pairs Of Symbols — 822

End — 824

# Figure 8

900

Start — 910

Estimate fading amplitudes — 912

Receive Two Symbols — 914

De-Map Two Symbols To Data Bits Using Two-Dimensional Soft De-Mapper — 916

De-Interleave Data Bits — 918

Decode De-Interleaved Data Bits — 920

End — 922

**Figure 9**

20

EP 1 583 271 A2